# EUROPEAN PATENT SPECIFICATION

(11) **EP 3 677 453 B1**
(45) Date of publication and mention of the grant of the patent: **02.06.2021**
(21) Application number: 19203207.6
(22) Date of filing: 15.10.2019
(51) Int. Cl.: B60C 19/00, B29D 30/00, B60C 11/01, B60C 13/00

(54) **TIRE AND TIRE MANUFACTURING METHOD**
REIFEN UND REIFENHERSTELLUNGSVERFAHREN
PNEUMATIQUE ET PROCÉDÉ DE FABRICATION DE PNEUMATIQUE

(30) Priority: 14.11.2018 JP 2018213620
(43) Date of publication of application: 08.07.2020
(73) Proprietor: Toyo Tire Corporation, Itami-shi, Hyogo 664-0847 (JP)
(72) Inventor: NAGAYOSHI, Hiraku, Itami-shi,, Hyogo 664-0847 (JP)
(74) Representative: Müller-Boré & Partner Patentanwälte PartG mbB

(56) References cited:
- DE-A1- 10 156 776
- US-A- 4 911 217

## Description

### BACKGROUND OF THE INVENTION

### Field of the Invention

The present invention relates to a tire in which an electronic component is embedded.

### Related Art

Conventionally, tires in which an electric component such as an RFID tag is embedded within the rubber structure have been known. With such tires, by an RFID tag embedded in the tire and a reader as an external device carrying out communication, it is possible to perform production control of tires, usage history management, etc. For example, Patent Document 1 discloses a tire arranging a chip assembled with
the electronic component having an antenna arranged at a portion adjacent to an inner liner. In addition, it shows being possible to also arrange the electronic component between a carcass and side wall, or between a carcass and tread portion. Further examples of tires comprising an electronic component embedded in the buttress region are to be found in the documents DE 10156776 A1 and US 4911217 A.

Patent Document 1: Japanese Unexamined Patent Application, Publication No. 2005-335384

### SUMMARY OF THE INVENTION

In the technology shown in Patent Document 1, in the case of arranging the electronic component between the carcass and side wall, for example, since the properties greatly differ between the carcass and side wall, relative movement arises between both members during vulcanization and during use due to this difference in properties, for example, differences in linear expansion coefficient, elastic modulus, etc., and there is a possibility of the electronic component receiving stress. Then, if exceeding the allowable stress, there is a possibility of the electronic component no longer maintaining the function thereof. In addition, in a case of arranging the electronic component in a portion adjacent to the inner liner, since the distance from the outer surface of the tire until the electronic component will be far, there is concern over the communication quality declining when the electronic component performs communication with the outside, etc.

The present invention has been made taking account of the above-mentioned problem, and an object thereof is to provide a tire in which an embedded electronic component can maintain the function thereof.

A tire (for example, the tire 1) according to a first aspect of the present invention includes: a carcass ply (for example, the carcass ply 23) which extends from one bead to another bead; side-wall rubber (for example, the side-wall rubber 30) which is disposed at an outer side in a tire-width direction of the carcass ply; and tread rubber (for example, the tread rubber 28) which is disposed at an outer side in a tire-radial direction of the carcass ply, in which the side-wall rubber and the tread rubber are laminated at a tire outer surface side of a region of at least part of the carcass ply, and in which an electronic component (for example, the RFID tag 40) is disposed between the side-wall rubber and the tread rubber.

According to a second aspect of the present invention, in the tire as described in the first aspect, the side-wall rubber and the tread rubber may be laminated in order at a tire outer surface side of the carcass ply.

According to a third aspect of the present invention, in the tire as described in the first aspect, the tread rubber and the side-wall rubber may be laminated in order at a tire outer surface side of the carcass ply.

According to a fourth aspect of the present invention, in the tire as described in the first to third aspect, the electronic component may be disposed in a vicinity of an intermediate position of an interface between the tread rubber and the side-wall rubber, in a cross-sectional view in the tire-width direction.

According to a fifth aspect of the present invention, in the tire as described in the first to fourth aspect, the electronic component is embedded in a buttress part (for example, the buttress part 14) including at least a protrusion (for example, the protrusion 35) at a tire outer surface.

In a manufacturing method of a tire according to a sixth aspect of the present invention, in which the tire includes: a carcass ply which extends from one bead to another bead, side-wall rubber which is disposed at an outer side in a tire-width direction of the carcass ply, and tread rubber which is disposed at an outer side in a tire-radial direction of the carcass ply, the method including the steps of: arranging an electronic component at the side-wall rubber prior to vulcanization or at the tread rubber prior to vulcanization; laminating the side-wall rubber prior to vulcanization and the tread rubber prior to vulcanization at a tire outer surface side of a region of at least part of the carcass ply, interposing the electronic component between the side-wall rubber and the tread rubber, and molding a green tire; and vulcanizing the green tire which was molded.

According to the present invention, it is possible to provide a tire in which an embedded electronic component can maintain the function thereof.

### BRIEF DESCRIPTION OF THE DRAWINGS

FIG. 1 is a view showing a half section in a tire-width direction of a tire according to a first embodiment of the present invention;
FIG. 2 is a partially enlarged cross-sectional view of a tire according to the first embodiment of the present invention; FIG. 3 is a view showing a half section in the tire-width direction of the tire according to a modified example of the first embodiment of the present invention;
FIG. 4A is a view showing an RFID tag which is protected by a protective member in a tire according to a second embodiment of the present invention;
FIG. 4B is a view showing a cross section along the line b-b in FIG. 4A;
FIG. 4C is a view showing a cross section along the line c-c in FIG. 4A;
FIG. 5 is a view showing a cross section prior to interposing the RFID tag by rubber sheets in a case of not filling rubber inside a spring antenna;
FIG. 6 is a view showing a cross section after interposing an RFID tag by rubber sheets, in a case of not filling rubber into the spring antenna;
FIG. 7 is a view showing a cross section after interposing the RFID tag by rubber sheets, in a case of not filling rubber inside a spring antenna;
FIG. 8 is a view showing the RFID tag prior to filling rubber inside a spring antenna, in a tire according to a third embodiment of the present invention;
FIG. 9 is a view showing the RFID tag after filling rubber inside a spring antenna, in a tire according to the third embodiment of the present invention;
FIG. 10 is a view showing the RFID tag prior to interposing by rubber sheets, in a tire according to the third embodiment of the present invention; and
FIG. 11 is a view showing the RFID tag interposed by rubber sheets, in a tire according to the third embodiment of the present invention.

### DETAILED DESCRIPTION OF THE INVENTION

### <First Embodiment>

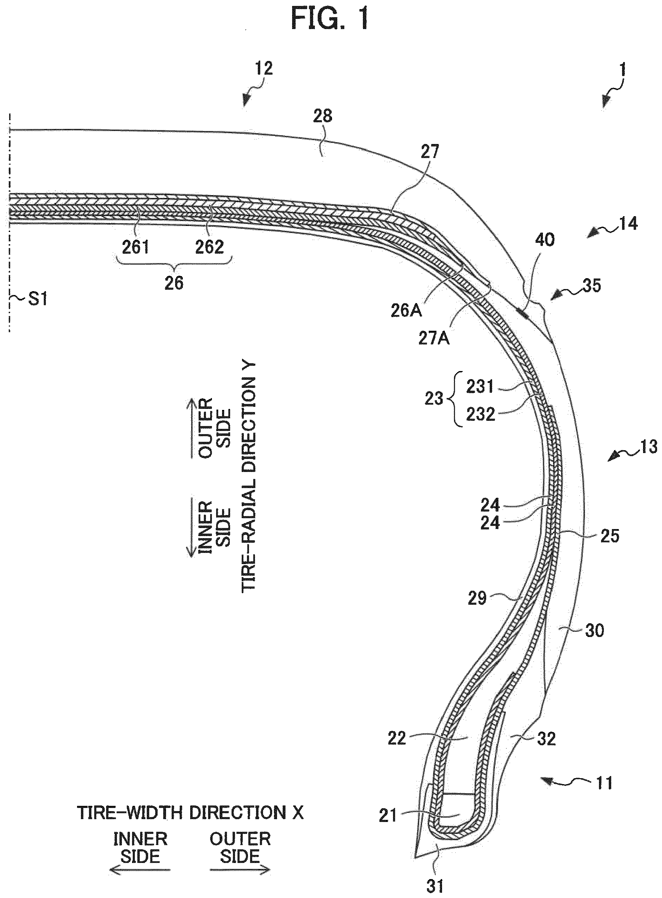

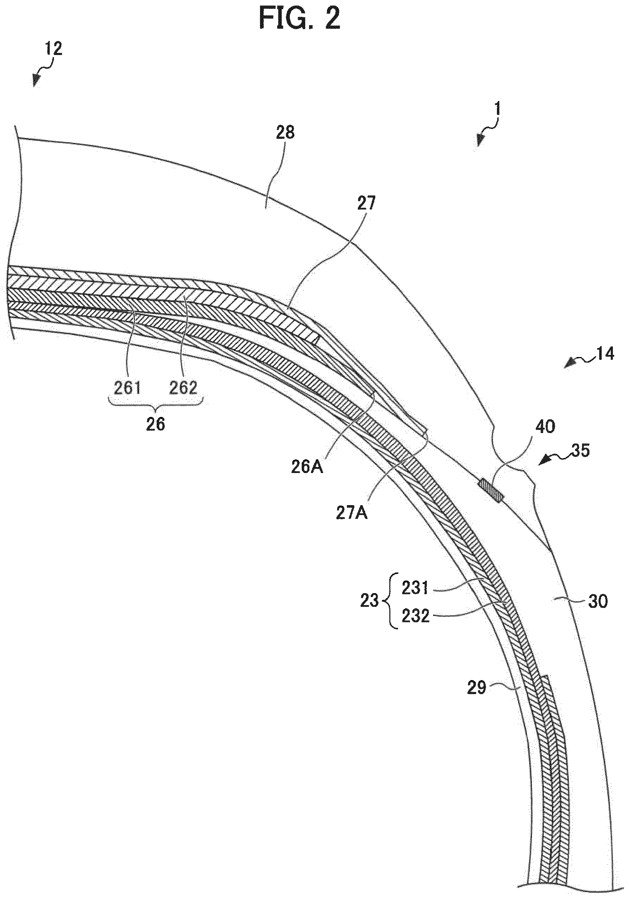

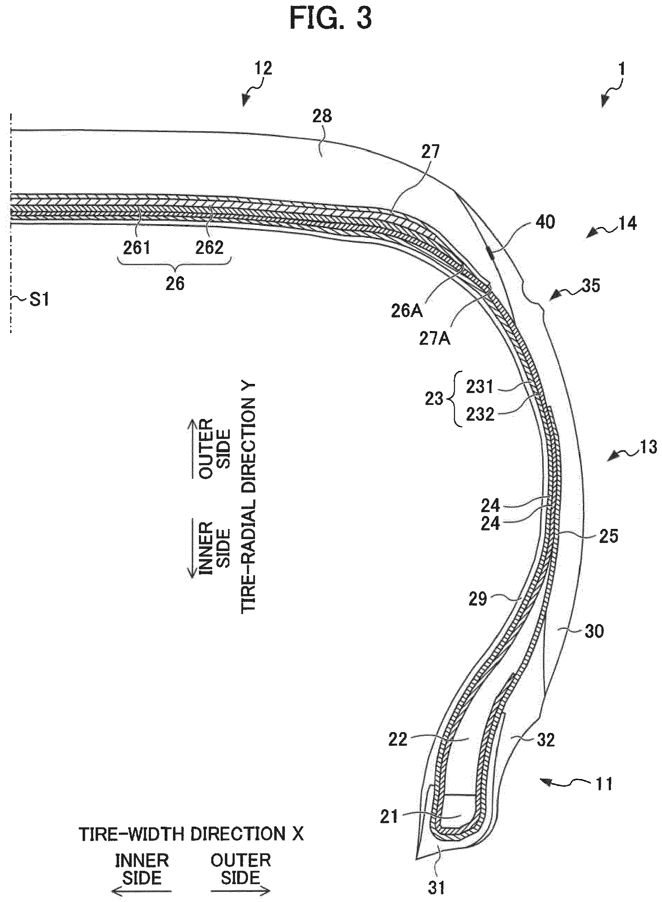

Hereinafter, a first embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner-side of tire-width direction is a direction approaching the tire equatorial plane S1, and is the left side of the paper plane in FIG. 1. Outer side in the tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer-side in the tire-radial direction is a direction distancing from the tire rotation axis, and is the upper side of the paper plane in FIG. 1. Inner-side in the tire-radial direction is a direction approaching the tire rotational axis, and is the lower side of the paper plane in FIG. 1. The same also applies to FIGS. 2 and 3.

The tire 1 is a tire for passenger cars, for example, and includes a pair of beads 11 provided at both sides in the tire-width direction, a tread 12 forming the contact patch with the road surface, and a pair of side walls 13 extending between the pair of beads 11 and the tread 12.

The bead 11 includes an annular bead core 21 formed by wrapping around several times bead wires made of metal coated with rubber, and a bead filler 22 of tapered tip shape extending to the outer side in the tire-radial direction of the bead core 21. The bead core 21 is a member which plays a role of fixing a tire 1 filled with air to the rim of a wheel which is not illustrated. The bead filler 22 is a member provided in order to raise the rigidity of the bead peripheral part and to ensure high maneuverability and stability, and is configured from rubber of a higher modulus than the surrounding rubber members, for example.

A carcass ply 23 constituting a ply serving as the skeleton of the tire 1 is embedded inside of the tire 1. The carcass ply 23 extends from one bead core 21 to the other bead core 21. In other words, it is embedded in the tire 1 between the pair of bead cores 21, in a form passing through the pair of side walls 13 and the tread 12. As shown in FIG. 1, the carcass ply 23 includes a ply body 24 which extends from one bead core 21 to the other bead core 21, and extends between the tread 12 and bead 11, and a ply folding part 25 which is folded around the bead core 21. In the present embodiment, the ply folding part 25 is overlapped with the ply body 24. The carcass ply 23 is configured by a plurality of ply cords extending in the tire-width direction. In addition, a plurality of ply cords is arranged side by side in a tire circumferential direction. This ply cord is configured by an insulated organic fiber cord such as polyester or polyamide, or the like, and is covered by rubber. It should be noted that the carcass ply 23 of the present embodiment is configured by two layers of carcass ply in which a first carcass ply 231 and second carcass ply 232 are overlapped; however, the carcass ply 23 may be one layer, or three or more layers.

In the tread 12, at least one ring-shaped steel belt 26 which extends in a circumferential direction of the tire is provided in the outer side in the tire-radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although two layers of steel belts 261, 262 are provided, the number of layered steel belts 26 is not limited thereto.

At the outer side in the tire-radial direction of the steel belt 26, a cap ply 27 serving as a belt reinforcement layer is provided. The cap ply 27 is configured from an insulating organic fiber layer such as of polyamide fibers, and is covered by rubber. By providing the cap ply 27, it is possible to achieve an improvement in durability and a reduction in road noise while travelling. In the present embodiment, the tire-width direction outside end 27A of the cap ply 27 extends more to the outer side in the tire-width direction than the tire-width direction outside end 26A of the steel belt 26.

The tread rubber 28 is provided at the outer side in the tire-radial direction of the cap ply 27. A tread pattern (not illustrated) is provided to the outer surface of the tread rubber 28, and this outer surface serves as a contact patch which contacts with the road surface.

In the bead 11, side wall 13 and tread 12, an inner liner 29 serving as a rubber layer constituting an inside wall surface of the tire 1 is provided to a tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire 1 exhibiting a cushioning action, and usually flexible rubber having fatigue resistance is adopted therein. Herein, as shown in FIG. 1, the side-wall rubber 30 extends towards the tread 12. On the other hand, the tread rubber 28 extends towards the side wall 13. As a result thereof, at the tire outer surface side in a partial region of the carcass ply 23, the tread rubber 28 and side-wall rubber 30 enter a laminated state. In more detail, in a region in which both the side-wall rubber 30 and tread rubber 28 exist, i.e. transition region of side wall 13 and tread 12, the side-wall rubber 30 and tread rubber 28 enter a laminated state in order at the tire outer surface side of the carcass ply 23.

A chafer 31 is provided on the inner side in the tire-radial direction of the carcass ply 23 provided around the bead core 21 of the bead 11. The chafer 31 also extends to the outer side in the tire-width direction of the ply folding part 25 of the carcass ply 23, and rim strip rubber 32 is further provided at the outer side in the tire-width direction thereof. The outer side in the tire-width direction of this rim strip rubber 32 connects with the side wall rubber 30.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. In a storage part inside the RFID chip, identification information such as a manufacturing number and part number is stored.

FIG. 2 is an enlarged cross-sectional view showing an embedded part periphery of the RFID tag 40 in the tire 1 of FIG. 1. As shown in FIGS. 1 and 2, the RFID tag 40 is embedded between the side-wall rubber 30 and tread rubber 28. This position is suitable as the embedding position, when considering the communication quality of the RFID tag 40. In other words, by embedding the RFID tag 40 between the side-wall rubber 30 and tread rubber 28, in the transition region of the side wall 13 and tread 12, it is possible to arrange the RFID tag 40 at a position sufficiently distanced from the bead core 21 made of metal, which has a possibility of adversely influencing the communication. Herein, the bead core 21 is a metal member having a particularly high possibility of adversely influencing the communication, due to being formed in a ring shape by winding in layers the metal bead wires. In addition, as shown in FIGS. 1 and 2, upon causing the tire-width direction outside end 27A of the cap ply 27 to extend more to the outer side in the tire-width direction than the tire-width direction outside end 26A of the steel belt 26, a configuration may be adopted which arranges the RFID tag 40 more to the tire outer surface side than the tire-width direction outside end 27A of the cap ply 27, and reliably distances the RFID tag 40 from the steel belt 26 made of metal. Then, when considering the communication quality, it is preferable for the RFID tag 40 to be arranged at a portion as close to the outer surface of the tire 1 as possible. Assuming that the RFID tag 40 is arranged at the inner cavity side of the carcass ply 23, the communication quality will drop due to being distanced from the outer surface of the tire 1. In addition, since the rubber layer on the tire outer surface side of the carcass ply 23 is a thicker rubber layer than the inner liner 29, during vulcanization, it tends to maintain a state in which the RFID tag 40 is embedded within the rubber layer. When considering these parts, between the side-wall rubber 30 and tread rubber 28 is suitable as the embedding position of the RFID tag 40.

In addition, when considering embedding the RFID tag 40 during the manufacturing process of the tire 1, it is preferable to insert the RFID tag 40 between the different rubber members constituting the tire 1. For example, in an embodiment forming the side-wall rubber by a so-called ribbon winding process, in the case of interposing the RFID tag 40 between the lamination layers of ribbon-like rubber members which are wound, the timing at which pasting the RFID tag to the ribbon-like rubber member, etc. becomes complicated. On the other hand, if arranging between different rubber members as in the present embodiment, upon pasting the RFID tag 40 precisely on one rubber member in the molding process of the tire 1, it is possible to overlap the other rubber member with this to interpose the RFID tag 40. Even when considering these points, between the side-wall rubber 30 and tread rubber 28 is suitable as the embedding position of the RFID tag 40.

In addition, in the case of arranging the RFID tag 40 to be interposed between plies such as the carcass ply 23, there is a possibility of stress acting on the RFID tag 40 when the interposing plies move in different directions from each other, for example. In addition, even in a case of the RFID tag 40 being interposed between a ply such as the carcass ply 23 and a rubber member such as the side-wall rubber 30, since the properties greatly differ between the ply and rubber member, relative movement arises between both members during vulcanization and during use due to the differences in properties thereof, for example, differences in linear expansion coefficient, elastic modulus, hardness, etc., and thus there is a possibility of the RFID tag 40 receiving stress. Then, if exceeding the allowable stress, there is a possibility of the RFID tag 40 no longer maintaining the function thereof. Additionally, the antenna of the RFID tag 40 is caught in the fibers of the ply if directly arranging the RFID tag 40 on a ply such as the carcass ply 23, and there is also a possibility of no longer being able to maintain the performance of the RFID tag 40 by the antenna being stretched during vulcanization. On the other hand, if between rubber members, a strong localized stress hardly occurs between members, and the antenna will not be caught therein. In addition, the rubber members have high adhesiveness at joints, and thus the joining state of the joints tends to be stable. The side-wall rubber 30 and tread rubber 28 are both rubber members, and even when considering these points, between the side-wall rubber 30 and tread rubber 28 is suitable as the embedding position of the RFID tag 40.

It should be noted that, as shown in FIGS. 1 and 2, the RFID tag 40 is preferably arranged in the vicinity of an intermediate position of an interface of the side-wall rubber 30 and tread rubber 28 formed in the transition region of the side wall 13 and tread 12, in a cross-sectional view in the tire-width direction. This position is a balanced position due to ensuring favorable communication quality, while reliably embedding the RFID tag 40.

Furthermore, as shown in FIGS. 1 and 2, the RFID tag 40 is preferably embedded in a buttress part 14 including the transition region of the side wall 13 and tread 12, which includes at least a protrusion 35 at a tire outer surface. Buttress part 14 is a portion on the outer side in the tire-radial direction of the side wall 13, which is a region adjacent to the contact end of the tread 12. In the example shown in FIGS. 1 and 2, the protrusion 35 and a recess are formed in the buttress part 14, and the RFID tag 40 is embedded in an area directly below this protrusion 35 or recess. The buttress part 14 has the protrusion 35 formed in the vulcanization process of the tire 1, or the protrusion 35 and recess. By embedding the RFID tag 40 in this buttress part 14, it is possible to achieve communication between the RFID tag 40 and reader, even in a case assuming the communication distance of the RFID tag 40 was shortened due to some problem. In other words, with the protrusion 35 of the buttress part 14 as a marker, it is also possible to execute a communication method achieving communication between the RFID tag 40 and reader by bringing the reader close to the vicinity of the protrusion 35. At this time, communication may be achieved by moving the reader in the circumferential direction of the tire 1 along the buttress part 14, and a mark related to the embedding position of the RFID may be made also in the circumferential direction of the tire 1.

It should be noted that the protrusion 35 of the buttress part 14, or protrusion 35 and recess are formed due to boundary portions of a plurality of molds used in the vulcanization process of the tire 1, and the flowability of rubber in the peripheral region thereof is particularly high during vulcanization. Consequently, when considering the stability of the joining state between members during the vulcanization, it is more preferable for the RFID tag 40 to be embedded between the side-wall rubber 30 and tread rubber 28, which are rubber members, than being embedded between the carcass ply 23 and side-wall rubber 30, which greatly differ in properties.

Herein, the RFID tag 40 is mounted prior to the vulcanization process, in the manufacturing process of the tire 1. In the present embodiment, the RFID tag 40 is mounted to the tread rubber 28 or side-wall rubber 30. At this time, since the tread rubber 28 and side-wall rubber 30 are in the state of raw rubber prior to vulcanization, the RFID tag 40 may be pasted to the tread rubber 28 or side-wall rubber 30 using the adhesiveness thereof. Alternatively, in a case of the adhesive property being low or the like, it may be pasted using an adhesive or the like. After pasting the RFID tag 40, the RFID 40 is interposed by the tread rubber 28 and side-wall rubber 30. Subsequently, the green tire in which the respective constitutional parts including the RFID 40 are assembled is vulcanized in the vulcanization process to manufacture a tire 1.

In other words, the manufacturing method of the tire 1 of the present embodiment includes: an arranging step of arranging the RFID tag 40 at the side-wall rubber 30 prior to vulcanization or tread rubber 28 prior to vulcanization; a molding step of laminating the side-wall rubber 30 prior to vulcanization and tread rubber 28 prior to vulcanization at the tire outer surface side in the region of at least part of the carcass ply 23, interposing the RFID tag 40 between the side-wall rubber 30 and tread rubber 28, and molding the green tire; and a vulcanization step of vulcanizing the molded green tire. In this way, in the present embodiment, since it is possible to paste the RFID tag 40 to the tread rubber 28 or side-wall rubber 30 in the raw rubber state during tire manufacture, the assembling work of the RFID tag 40 in the manufacturing process of the tire 1 is easy. It should be noted that, positioning upon pasting the RFID tag 40 is easier with the tread rubber 28 or side-wall rubber 30, than the carcass ply 23 which has a long distance from one end to the other end, i.e. component length, due to being able to establish the end of the member as a marker.

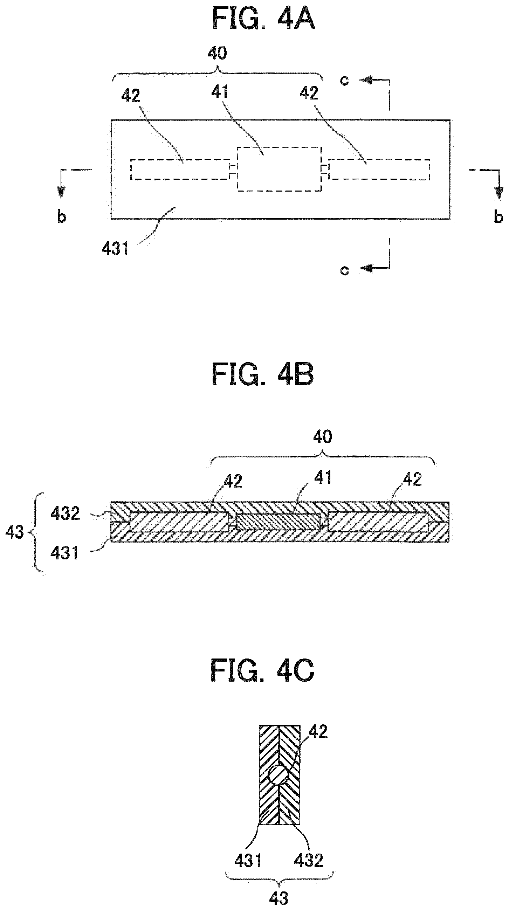

It should be noted that the RFID tag 40 embedded in the tire 1 tends to have a longitudinal direction if including an antenna, as shown in FIG. 4 described later as the RFID tag 40. Such an RFID tag 40 is preferably embedded in the tire 1 so that the longitudinal direction thereof becomes the direction of the tangential line relative to the circumferential direction of the tire 1, i.e. direction orthogonal to the paper plane in the cross-sectional view of FIGS. 1 and 2. By embedding in this way, stress hardly acts on the RFID tag 40 even when the tire 1 deforms.

It should be noted that the RFID tag 40 may be sandwiched between the side-wall rubber 30 and tread rubber 28 in a state covered by a protective member of rubber or the like; however, it may be sandwiched directly between the side-wall rubber 30 and tread rubber 28, without covering by a protective member.

It should be noted that, in the present embodiment, the RFID tag 40 is embedded in the tire as the electronic component; however, the electronic component embedded in the tire is not limited to an RFID tag. For example, it may be various electronic components such as a sensor which carries out wireless communication. In addition, since the electronic component handles electrical information such as the transmission of electrical signals, there is a possibility of the performance declining due to metal components being present in the vicinity. In addition, there is a possibility of the electronic component being damaged by excessive stress acting thereon. Therefore, it is possible to obtain the effects of the present invention also in the case of embedding various electronic components in a tire. For example, the electronic component may be a piezoelectric element or strain sensor.

FIG. 3 is a view showing a half section in the tire-width direction of the tire 1 of a modified example of the present embodiment. In the present modified example, at the tire outer surface side of a partial region of the carcass ply 23, it is a state in which the side-wall rubber 30 and tread rubber 28 are laminated. However, in the present modified example, the laminating order of the side-wall rubber 30 and tread rubber 28 differ. In other words, in the present modified example, at the transition region of the side wall 13 and tread 12, it becomes a state in which the tread rubber 28 and side-wall rubber 30 are laminated in order on the tire outer surface side of the carcass ply 23. In this configuration, the protrusion of the buttress part 14 is formed at the outer surface of the side-wall rubber 30. Then, the RFID tag 40 is embedded between the side-wall rubber 30 and tread rubber 28. Even in such a configuration, it is possible to obtain similar effects as mentioned above, such as being able to maintain favorable communication quality, while reliably embedding the RFID tag 40. In addition, by the tread rubber 28 being present between the steel belt 26 and RFID tag 40, it is possible to reliably estrange the RFID tag 40 from the steel belt 26 which is made of metal.

According to the tire 1 of the present embodiment, the following effects are exerted.
(1) In the tire 1 according to the present embodiment, at the tire outer surface side in a region of at least part of the carcass ply 23, the side-wall rubber 30 and tread rubber 28 are laminated, and the RFID tag 40 is arranged between the side-wall rubber 30 and tread rubber 28. It is thereby possible to maintain favorable communication quality, while reliably embedding the RFID tag 40. Furthermore, the step of assembling the RFID tag 40 within the tire also becomes easy.
(2) In the tire 1 according to the present embodiment, the side-wall rubber 30 and tread rubber 28 are laminated in order at the tire outer surface side of the carcass ply 23. The effect of (1) can be obtained even in a configuration in which the side-wall rubber 30 and tread rubber 28 are laminated in order, at the tire outer surface side of the carcass ply 23.
(3) In the tire 1 according to the present embodiment, at the tire outer surface side of the carcass ply 23, the tread rubber 28 and side-wall rubber 30 are laminated in order. The effect of (1) can be obtained even in a configuration in which the side-wall rubber 30 and tread rubber 28 are laminated in order, at the tire outer surface side of the carcass ply 23.
(4) In the tire 1 according to the present embodiment, the RFID tag 40 is arranged in the vicinity of an intermediate position of an interface of the tread rubber 28 and side-wall rubber 30, in a cross-sectional view in the tire-width direction. It is thereby possible to maintain favorable communication quality, while reliably embedding the RFID tag 40.
(5) In the tire 1 according to the present embodiment, the RFID tag 40 is embedded in the buttress part 14 which includes at least the protrusion 35 at the tire outer surface. It is thereby possible to achieve communication between the RFID tag 40 and reader, with the marker of the protrusion 35 of the buttress part 14.
(6) The manufacturing method of the tire 1 according to the present embodiment includes: an arranging step of arranging the RFID tag 40 at the side-wall rubber 30 prior to vulcanization or tread rubber 28 prior to vulcanization; a molding step of laminating the side-wall rubber 30 prior to vulcanization and tread rubber 28 prior to vulcanization at the tire outer surface side in the region of at least part of the carcass ply 23, interposing the RFID tag 40 between the side-wall rubber 30 and tread rubber 28 to mold the green tire; and a vulcanization step of vulcanizing the molded green tire. Since it is thereby possible to paste the RFID tag 40 to the tread rubber 28 or side-wall rubber 30 in the raw rubber state, the assembling work of the RFID tag 40 in the manufacturing process of the tire 1 is easy. In addition, since it is possible to paste the RFID tag 40 with an end of the tread rubber 28 or side-wall rubber 30 as a marker, positioning upon pasting is easy.

### <Second Embodiment>

Next, a tire 1 according to a second embodiment will be explained while referencing FIGS. 4A to 4C. It should be noted that, in the following explanation, the same reference symbols will be attached for configurations which are the same as the first embodiment, and detailed explanations thereof will be omitted.

FIG. 4A is a view showing the RFID tag 40 covered by a protective member 43 configured from a rubber sheet. In FIG. 4A, the RFID tag 40 is covered and hidden by the rubber sheet 431 described later. FIG. 4B is a cross-sectional view along the line b-b in FIG. 4A, and FIG. 4C is a cross-sectional view **along the line** c-c in FIG. 4A. In the present embodiment, as shown in FIGS. 4A to 4C, the RFID tag 40 is covered by the protective member 43.

The RFID tag 40 includes an RFID chip 41 and antenna 42 for performing communication with external equipment. As the antenna 42, a coil-shaped spring antenna, plate-shaped antenna, and various types of rod-shaped antennas can be used. For example, it may be an antenna formed by printing a predetermined pattern on a flexible substrate. When considering the communicability and flexibility, a coil-shaped spring antenna is the most preferable. The antenna is established at an antenna length optimized according to the frequency band, etc. to be used.

The protective member 43 is configured from two rubber sheets 431, 432 which protect by sandwiching the RFID tag 40.

The protective member 43 is configured by rubber of a predetermined modulus, for example. Herein, the modulus indicates 100% elongation modulus (M100) under a 23°C atmosphere, measured in accordance with "3.7 stress at a given elongation, S" of JIS K6251:2010.

As the rubber adopted in the protective member 43, rubber at least having a higher modulus than the side wall rubber 30 is used.

For example, with the modulus of the side wall rubber 30 as a reference, as the rubber used in the protective member 43, it is preferable to use rubber of a modulus 1.1 to 2 times. In addition, by using rubber having a higher modulus than the side-wall rubber 30 as the rubber adopted in the protective member 43, since the rigidity changes step-wise in the order of RFID tag 40, protective member 43 and side-wall rubber 30, it is possible to prevent excessive stress from generating within the rubber structure at the embedding part of the RFID tag 40, in the case of the tire 1 deforming.

In addition, the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a rubber sheet in the vulcanized state may be used. The rubber sheet in a vulcanized state does not plastically deform as raw rubber, and thus can appropriately protect the RFID tag 40.

In addition, as the protective member 43, an organic fiber layer from polyester fibers or polyamide fibers may be provided. It is also possible to embed an organic fiber layer in the two rubber sheets 431, 432.

If configuring the protective member 43 by two rubber sheets 431, 432 in this way, since it is possible to thinly form the RFID tag 40 including the protective member 43, it is favorable upon embedding in the tire 1. In addition, when assembling the RFID tag 40 in the constitutional members of the tire 1 prior to vulcanization, the RFID tag 40 covered by the rubber sheets 431, 432 can be installed very easily. For example, at a desired position of a member such as the tread rubber 28 and side-wall rubber 30 prior to vulcanization, it is possible to appropriately paste the RFID tag 40 covered by the rubber sheets 431, 432 using the adhesiveness of the raw rubber. In addition, by also establishing the rubber sheets 431, 432 as raw rubber prior to vulcanization, it is possible to more easily paste by employing the adhesiveness of the rubber sheets 431, 432 themselves as well.

However, the protective member 43 is not limited to the form configured by two rubber sheets 431, 432, and can adopt various forms. For example, so long as the rubber sheet constituting the protective member covers at least part of the RFID tag 40, effects such as an improvement in workability in the manufacturing process and stress mitigation can be obtained. In addition, for example, it may be a configuration wrapping one rubber sheet around the entire circumference of the RFID tag 40, or a configuration attaching the protective member in the form of a potting agent of high viscosity along the entire circumference of the RFID tag 40. Even if such a configuration, it will be possible to appropriately protect the RFID tag 40.

It should be noted that the RFID tag 40 covered by the protective member 43 is embedded in the tire 1 so that the longitudinal direction thereof becomes the direction of the tangential line relative to the circumferential direction of the tire 1, i.e. direction orthogonal to the paper plane in the cross-sectional view of FIGS. 1 to 3. In the manufacturing process, a side of either one of the rubber sheets 431, 432 is pasted to the tread rubber 28 or side-wall rubber 30 serving as constituent members of the tire 1 prior to vulcanization. By establishing such a form, stress will hardly act on the RFID tag 40, even when the tire 1 deforms. In addition, in the manufacturing process, the work of attaching the RFID tag 40 covered by the protective member 43 becomes easy.

According to the tire 1 of the present embodiment, the following effects are exerted in addition to the above (1) to (6) .

(7) In the present embodiment, the RFID tag 40 is covered by the rubber sheets 431, 432. The workability in the manufacturing processing thereby improves. In addition, the effect of mitigating the stress acting on the RFID tag 40, etc. are obtained.

### <Third Embodiment>

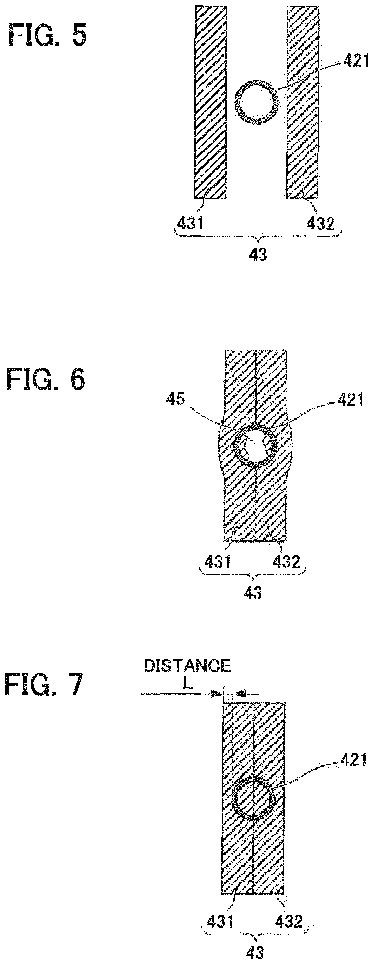

Next, a tire 1 according to a third embodiment will be explained while referencing FIGS. 5 to 11. It should be noted that, in the following explanation, the same reference symbols will be attached for configurations which are the same as the second embodiment, and detailed explanations thereof will be omitted. The present embodiment is a particularly preferable embodiment in the case of the antenna of the RFID tag 40 being a coil-shaped spring antenna.

In the RFID tag 40 of the present embodiment, a coil-shaped spring antenna 421 having high communicability and flexibility can be used as the antenna. The spring antenna 421 is set to an antenna length which was optimized according to the frequency band, etc. to be used.

In the present embodiment, prior to interposing the RFID tag 40 by the two rubber sheets 431, 432 constituting the protective member 43, the rubber is arranged within the spring antenna 421. More preferably, rubber is filled into the spring antenna, so that air will not remain as much as possible. This process and the reason for adopting this process will be explained using FIGS. 5 to 11.

First, a state of the surroundings of the RFID tag 40 in a case of not filling rubber into the spring antenna 421 will be explained as a reference example using FIGS. 5 to 7. FIG. 5 is a view showing a cross section of the spring antenna 421, and rubber sheets 431, 432, prior to interposing the RFID tag 40 by the rubber sheets 431, 432. FIG. 6 is a view showing a cross section of the spring antenna 421, and rubber sheets 431, 432, after interposing the RFID tag 40 by the rubber sheets 431, 432.

As shown in FIG. 6, in this reference example, since rubber is not filled into the spring antenna 421 in advance, a certain amount of air 45 may remain within the spring antenna 421 after interposing by the rubber sheets 431, 432. If air remains in this way, the integrity of the rubber sheets 431, 432 and the spring antenna 421 becomes insufficient, and when the tire 1 deforms, there is concern over the spring antenna 421 not following the motion of the rubber, and the RFID tag 40 having the spring antenna 421 being damaged.

It should be noted that raw rubber before vulcanization is used as the rubber sheets 431, 432 herein. Consequently, by pushing the rubber sheets 431, 432 from both sides, the rubber sheets 431, 432 sticks to some extent inside the spring antenna as shown in FIG. 6. However, very large amounts of time and labor are required in order to stick the rubber sheets 431, 432 until the inside of the spring antenna is completely embedded.

Then, even if assuming a case of taking time and sticking the rubber sheets 431, 432 until the inside of the spring antenna is embedded, the distance L between the outer circumferential part of the spring antenna 421 and the outer surface of the rubber sheets 431, 432 becomes very short, as shown in FIG. 7. In addition, it is difficult to stabilize this distance L, and locally thin portions can occur. Consequently, the protection of the RFID tag 40 by the rubber sheets 431, 42 becomes insufficient, and during vulcanization, there is a possibility of the rubber sheets 431, 432 being damaged.

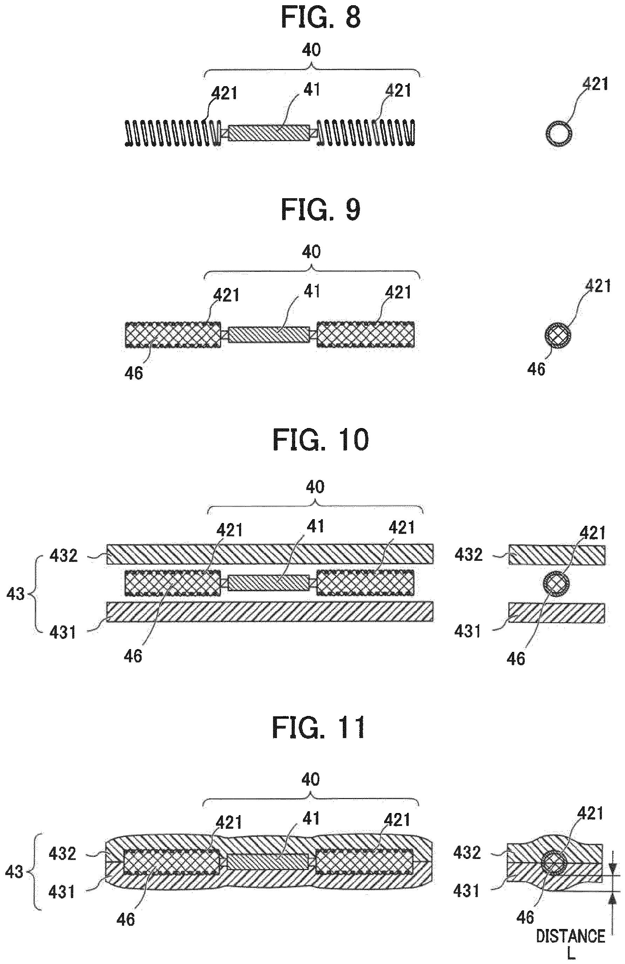

Therefore, in the present embodiment, prior to interposing the RFID tag 40 by the rubber sheets 431, 432, the rubber is arranged within the spring antenna 421, as shown in FIGS. 8 to 11. More preferably, rubber is filled within the spring antenna so that air does not remain as much as possible. It should be noted that the views shown on the right sides of FIGS. 8 to 11 are views showing a transverse section of the spring antenna 421 and the surrounding thereof.

FIG. 8 is a view showing a state prior to filling the rubber 46 into the spring antenna 421, and FIG. 9 is a view showing a state after filling the rubber 46 into the spring antenna 421. The rubber 46 is embedded so as to be almost the same outside diameter as the outer circumferential face of the spring antenna 421. Then, in the case of the rubber 46 escaping from the outer circumferential face of the spring antenna 421, it is preferable to wipe off this portion. In other words, the outer circumferential face of the rubber 46 is preferably molded so as to become substantially the same surface as the outer circumferential face of the spring antenna 421. It should be noted that the rubber 46 may be filled into the spring antenna 421, and the outer circumference of the spring antenna 421 may be thinly wrapped by the rubber 46. On the other hand, if thickly wrapping the spring antenna 421 by the rubber 46, in addition to the flexibility of the spring antenna 421 being harmed, the dimension in the width direction formed by the rubber sheets 431, 432 after interposing the RFID tag 40 becomes larger, which is not preferable. It should be noted that the rubber 46 may be embedded so as to become substantially the same outside diameter as the inner circumferential face of the spring antenna 421. It is desirable for the outer circumferential part of the rubber 46 to be located within the range of the inner circumferential face and outer circumferential face of the spring antenna 421.

Herein, rubber having flexibility is used as the rubber 46 in order to ensure the flexibility of the spring antenna 421. However, it is preferable to use rubber of a modulus higher than the rubber sheets 431, 432 as the rubber 46, in consideration of the workability, etc. It should be noted that preferably unvulcanized rubber is used as the rubber 46 arranged within the spring antenna 421. By establishing the rubber 46 and rubber sheets 431, 432 as unvulcanized rubber and vulcanizing simultaneously, the integrity of the rubber 46, rubber sheets 431, 432 and spring antenna 421 rises. In addition, the rubber 46, and rubber sheets 431, 432 are more preferably established as the same type of rubber. It should be noted that, by emphasizing the flexibility of the spring antenna 421, rubber of lower modulus than the rubber sheets 431, 432 may be used as the rubber 46. In addition, rubber of substantially the same modulus, and rubber of the same material may be used. It should be noted that vulcanized rubber may be used as the rubber 46 arranged within the spring antenna 421. In addition, rubber-based adhesive, rubber-based filler, etc. can also be used. Taking account of configuring so as not to leave air within the spring antenna 421 as much as possible, while ensuring flexibility, it is possible to adopt various rubber-based materials. As the arranging operation of the rubber 46, various methods can be adopted; however, for example, it is also possible to inject rubber into the spring antenna 421 using a syringe. In this case, a set appropriate amount of the rubber 46 may be filled using a syringe. In addition, after filling a large amount of the rubber 46, portions protruding from the outer circumference of the spring antenna 421 may be wiped off.

FIG. 10 is a view showing a state prior to interposing the RFID tag 40 into which the rubber 46 is filled in the spring antenna 421, by the rubber sheets 431, 432, and FIG. 11 is a view showing a state after interposing by the rubber sheets 431, 432.

As shown in FIG. 11, according to the present embodiment, since the rubber 46 is filled in advance into the spring antenna 421, no air pockets exist between the rubber sheets 431, 432. Consequently, since it is unnecessary to be concerned over air pockets, the process of interposing the RFID tag 40 by the rubber sheets 431, 432 also becomes easy. In addition, by the rubber 46 being arranged within the spring antenna 421, the integrity of the spring antenna 421, rubber 46, and rubber sheets 431, 432 rises, and when the tire 1 deforms, the spring antenna 421 follows the movement of the rubber. Consequently, the durability of the RFID tag 40 having the spring antenna 421 also improves.

In addition, according to the present embodiment, the distance L between the outer circumferential part of the spring antenna 421 and the outer circumferential face of the rubber sheets 431, 432 stabilizes. In other words, a distance close to the thickness of the rubber sheets 431, 432 is generally secured as this distance L. Consequently, the RFID tag 40 is sufficiently protected by the rubber sheets 431, 432. In the present embodiment, the RFID tag 40 interposed by the rubber sheets 431, 432 is fixedly set up at the tread rubber 28 or side-wall rubber 30, and subsequently, the green tire is vulcanized.

According to the tire 1 of the present embodiment, the following effects are exerted in addition to the above (1) to (7) .

(8) The present embodiment provides a step of arranging the rubber 46 within the spring antenna 421 of the RFID tag 40 serving as an electronic component having a communication function; a step of interposing the RFID tag 40 having the spring antenna 421 into which the rubber 46 was arranged, by the rubber sheets 431, 432, and an arrangement step of arranging the RFID tag 40 interposed by the rubber sheets 431, 432 in the tire 1. Air will thereby not remain inside the spring antenna 421. In addition, since it is unnecessary to be concerned about air pockets, the work of interposing the RFID tag 40 by the rubber sheets 431, 432 also becomes easy. In addition, since the distance L between the outer circumferential part of the spring antenna 421 and the outer surface of the rubber sheets 431, 432 is stabilized, the RFID tag 40 is sufficiently protected by the rubber sheets 431, 432. In the case of an embodiment in which the RFID tag 40 is embedded between the tread rubber 28 and side-wall rubber 30 as in the tire of the present embodiment, i.e. case of being embedded in a portion of the tire 1 near the outer surface, such air pocket countermeasures and enhanced protection measures are particularly effective.

It should be noted that, although the tire of the present invention can be adopted as various types of tires such as for cars, light trucks, trucks and buses, it is particularly suitable as a tire for automobiles. It should be noted that the present invention is only limited by the scope of the appended claims.

### EXPLANATION OF REFERENCE NUMERALS

- 1: tire
- 11: bead
- 12: tread
- 13: side wall
- 14: buttress part
- 21: bead core
- 22: bead filler
- 23: carcass ply
- 24: ply body
- 25: ply folding part
- 26: steel belt
- 27: cap ply
- 28: tread rubber
- 29: inner liner
- 30: side-wall rubber
- 31: chafer
- 32: rim strip rubber
- 35: protrusion
- 40: RFID tag
- 41: RFID chip
- 42: antenna
- 43: protective member
- 431, 432: rubber sheet
- 46: rubber

## Claims

1. A tire (1) comprising:
a carcass ply (23) which extends from one bead (11) to another bead (11);
side-wall rubber (30) which is disposed at an outer side in a tire-width direction of the carcass ply (23); and
tread rubber (28) which is disposed at an outer side in a tire-radial direction of the carcass ply (23),
wherein the side-wall rubber (30) and the tread rubber (28) are laminated at a tire outer surface side of a region of at least part of the carcass ply (23), **characterised in that**
an electronic component (40) is disposed between the side-wall rubber (30) and the tread rubber (28).

2. The tire (1) according to claim 1, wherein the side-wall rubber (30) and the tread rubber (28) are laminated in order at a tire outer surface side of the carcass ply (23).

3. The tire (1) according to claim 1, wherein the tread rubber (28) and the side-wall rubber (30) are laminated in order at a tire outer surface side of the carcass ply (23).

4. The tire (1) according to any one of claims 1 to 3, wherein the electronic component (40) is disposed in a vicinity of an intermediate position of an interface between the tread rubber (28) and the side-wall rubber (30), in a cross-sectional view in the tire-width direction.

5. The tire (1) according to any one of claims 1 to 4, wherein the electronic component (30) is embedded in a buttress part (14) including at least a protrusion at a tire outer surface.

6. A manufacturing method of a tire (1) which includes: a carcass ply (23) which extends from one bead (11) to another bead (11),
side-wall rubber (30) which is disposed at an outer side in a tire-width direction of the carcass ply (23), and
tread rubber (28) which is disposed at an outer side in a tire-radial direction of the carcass ply (23),
wherein the method comprises the steps of:
arranging an electronic component (40) at the side-wall rubber (30) prior to vulcanization or at the tread rubber (28) prior to vulcanization;
laminating the side-wall rubber (30) prior to vulcanization and the tread rubber (28) prior to vulcanization at a tire outer surface side of a region of at least part of the carcass ply (23), interposing the electronic component (40) between the side-wall rubber (30) and the tread rubber (28), and molding a green tire; and
vulcanizing the green tire which was molded.

## Patentansprüche

1. Reifen (1), aufweisend:
eine Karkassenlage (23), die sich von einem Wulst (11) zu einem anderen Wulst (11) erstreckt;
Seitenwandgummi (30), das in einer Reifenbreitenrichtung der Karkassenlage (23) an einer Außenseite angeordnet ist; und
Laufflächengummi (28), das in einer Reifenradialrichtung der Karkassenlage (23) an einer Außenseite angeordnet ist,
wobei das Seitenwandgummi (30) und das Laufflächengummi (28) an einer Reifenaußenflächenseite eines Bereichs mindestens eines Teils der Karkassenlage (23) geschichtet sind,
**dadurch gekennzeichnet, dass**
zwischen dem Seitenwandgummi (30) und dem Laufflächengummi (28) eine elektronische Komponente (40) angeordnet ist.

2. Reifen (1) nach Anspruch 1, wobei das Seitenwandgummi (30) und das Laufflächengummi (28) der Reihe nach an einer Reifenaußenflächenseite der Karkassenlage (23) geschichtet sind.

3. Reifen (1) nach Anspruch 1, wobei das Laufflächengummi (28) und das Seitenwandgummi (30) der Reihe nach an einer Reifenaußenflächenseite der Karkassenlage (23) geschichtet sind.

4. Reifen (1) nach einem der Ansprüche 1 bis 3, wobei die elektronische Komponente (40), in einer Querschnittsansicht in der Reifenbreitenrichtung, in der Nähe einer Zwischenposition einer Schnittstelle zwischen dem Laufflächengummi (28) und dem Seitenwandgummi (30) angeordnet ist.

5. Reifen (1) nach einem der Ansprüche 1 bis 4, wobei die elektronische Komponente (30) in einen Stützteil (14) eingebettet ist, der mindestens einen Vorsprung an einer Reifenaußenfläche umfasst.

6. Herstellungsverfahren eines Reifens (1), umfassend: eine Karkassenlage (23), die sich von einem Wulst (11) zu einem anderen Wulst (11) erstreckt,
Seitenwandgummi (30), das in einer Reifenbreitenrichtung der Karkassenlage (23) an einer Außenseite angeordnet ist, und
Laufflächengummi (28), das in einer Reifenradialrichtung der Karkassenlage (23) an einer Außenseite angeordnet ist, wobei das Verfahren die folgenden Schritte umfasst:
Anordnen einer elektronischen Komponente (40) an dem Seitenwandgummi (30) vor Vulkanisation, oder an dem Laufflächengummi (28) vor Vulkanisation;
Schichten des Seitenwandgummis (30) vor Vulkanisation und des Laufflächengummis (28) vor Vulkanisation an einer Reifenaußenflächenseite eines Bereichs mindestens eines Teils der Karkassenlage (23), Anordnen der elektronischen Komponente (40) zwischen dem Seitenwandgummi (30) und dem Laufflächengummi (28), und Formen eines Rohreifens; und Vulkanisieren des Rohreifens, der geformt wurde.

## Revendications

1. Pneumatique (1) comprenant :
une toile (23) de pneu, s'étendant d'un talon (11) à un autre talon (11) ;
une gomme de flanc (30) disposée au niveau d'un côté externe, dans la direction de la largeur du pneumatique, de la toile (23) de pneu ; et
une gomme de bande de roulement (28) disposée au niveau d'un côté externe, dans la direction radiale du pneumatique, de la toile (23) de pneu,
la gomme de flanc (30) et la gomme de bande de roulement (28) étant stratifiées au niveau d'un côté surface externe du pneumatique d'une région d'au moins une partie de la toile (23) de pneu,
**caractérisé en ce que**
un composant électronique (40) est disposé entre la gomme de flanc (30) et la gomme de bande de roulement (28).

2. Le pneumatique (1) selon la revendication 1, dans lequel la gomme de flanc (30) et la gomme de bande de roulement (28) sont stratifiées dans l'ordre au niveau d'un côté surface externe du pneumatique de la toile (23) de pneu.

3. Le pneumatique (1) selon la revendication 1, dans lequel la gomme de bande de roulement (28) et la gomme de flanc (30) sont stratifiées dans l'ordre au niveau d'un côté surface externe du pneumatique de la toile (23) de pneu.

4. Le pneumatique (1) selon l'une quelconque des revendications 1 à 3, dans lequel le composant électronique (40) est disposé à proximité d'une position intermédiaire d'une interphase entre la gomme de bande de roulement (28) et la gomme de flanc (30), dans une vue en section transversale dans la direction de la largeur du pneumatique.

5. Le pneumatique (1) selon l'une quelconque des revendications 1 à 4, dans lequel le composant électronique (30) est intégré dans une partie contrefort (14) comprenant au moins une saillie au niveau d'une surface externe du pneumatique.

6. Procédé de fabrication d'un pneumatique (1) comprenant :
une toile (23) de pneu, s'étendant d'un talon (11) à un autre talon (11),
une gomme de flanc (30) disposée au niveau d'un côté externe, dans la direction de la largeur du pneumatique, de la toile (23) de pneu, et
une gomme de bande de roulement (28) disposée au niveau d'un côté externe, dans la direction radiale du pneumatique, de la toile (23) de pneu,
le procédé comprenant les étapes suivantes :
l'agencement d'un composant électronique (40) au niveau de la gomme de flanc (30) avant la vulcanisation, ou au niveau de la gomme de bande de roulement (28) avant la vulcanisation ;
la stratification de la gomme de flanc (30) avant la vulcanisation, et de la gomme de bande de roulement (28) avant la vulcanisation, au niveau d'un côté surface externe du pneumatique d'une région d'au moins une partie de la toile (23) de pneu, interposant le composant électronique (40) entre la gomme de flanc (30) et la gomme de bande de roulement (28), et le moulage d'un pneumatique cru ; et
la vulcanisation du pneu cru moulé.
